# FASCICULE DE BREVET EUROPEEN

(11) **EP 2 793 197 B1**
(45) Date de publication et mention de la délivrance du brevet: **02.10.2019**
(21) Numéro de dépôt: 14160303.5
(22) Date de dépôt: 17.03.2014
(51) Int. Cl.: G07C 9/00, G07F 17/00, G07B 15/00

(54) **Procédé et système automatique de contrôle d'accès**
Verfahren und automatisches System zur Zugangskontrolle
Automatic system and method for access control

(30) Priorité: 21.03.2013 FR 1352537
(43) Date de publication de la demande: 22.10.2014
(73) Titulaire: JCDecaux SA, 92200 Neuilly-Sur-Seine (FR)
(72) Inventeur: Ebersold, Philippe, 78000 Versailles (FR); Bridel, Alain, 78310 Maurepas (FR)
(74) Mandataire: Cabinet Plasseraud

(56) Documents cités:
- WO-A1-2010/027318
- FR-A1- 2 863 089
- JP-A- H10 124 575
- US-A1- 2011 302 016

## Description

### DOMAINE DE L'INVENTION

La présente invention est relative aux procédés et systèmes de contrôle d'accès pour accéder à un service de mise à disposition automatique de cycles.

Plus particulièrement, l'invention concerne un procédé de contrôle d'accès comportant une étape d'identification dans laquelle on lit un support d'information codé identifiant un utilisateur, pour lui donner accès à un service de mise à disposition automatique de cycles.

### ARRIERE PLAN DE L'INVENTION

Dans les procédés connus de ce type, voir par exemple EP-A1-2863089, l'utilisateur est généralement enregistré une fois pour toutes en correspondance avec un support d'information donné. Ce mode d'identification oblige toutefois l'utilisateur à utiliser de multiples supports d'information codés, par exemple des cartes électroniques ou magnétiques, ce qui n'est pas pratique.

### OBJETS DE L'INVENTION

La présente invention a notamment pour but de pallier cet inconvénient.

A cet effet, l'invention propose un procédé de contrôle d'accès mis en oeuvre par un système automatique de contrôle d'accès comportant des moyens automatiques de lecture de supports d'information et des moyens automatiques de contrôle adaptés pour sélectivement autoriser un accès (à un lieu, bien ou service), le procédé comportant au moins les étapes suivantes :
(a) une étape d'enregistrement initial dans laquelle on enregistre un utilisateur et on lui communique un premier identifiant (objet codé ou code d'identification dématérialisé),
(b) une étape d'association dans laquelle l'utilisateur, déjà en possession d'un support d'information personnel (21, 22) codé portant un deuxième identifiant, s'identifie avec le premier identifiant et fait lire ce support d'information personnel (21, 22) par lesdits moyens automatiques de lecture, un support d'information personnel codé portant un deuxième identifiant, après quoi on associe l'utilisateur au deuxième identifiant,
(c) au moins une étape ultérieure d'identification, dans laquelle on fait lire ledit support d'information personnel par lesdits moyens automatiques de lecture pour accéder au deuxième identifiant, et on commande les moyens automatiques de contrôle en fonction de la lecture dudit support d'information personnel, pour sélectivement débloquer un cycle initialement verrouillé sur un poste de verrouillage.

Grâce à ces dispositions, chaque utilisateur peut utiliser son propre support d'information personnel codé pour peu qu'il soit compatible avec les moyens automatiques de lecture du système, ce qui lui évite de multiplier inutilement les supports d'information codés qu'il doit avoir sur lui.

Dans différents modes de réalisation du procédé selon l'invention, on peut éventuellement avoir recours en outre à l'une et/ou à l'autre des dispositions suivantes (utilisables éventuellement indépendamment les unes des autres et indépendamment des dispositions précitées) :
- le support d'information personnel est un support d'information électronique à lecture sans contact ;
- le support d'information personnel est choisi parmi un support d'information RFID et un support d'information NFC ;
- le support d'information personnel est choisi parmi une carte électronique et un téléphone mobile ;

Par ailleurs, l'invention a également pour objet un système automatique de contrôle d'accès pour la mise à disposition automatique de cycles, comportant des moyens de commande, des moyens automatiques de lecture de supports d'information et des moyens automatiques de contrôle adaptés pour sélectivement autoriser un accès, les moyens de commande étant adaptés pour :
- enregistrer un utilisateur et lui communiquer un premier identifiant,
- identifier l'utilisateur avec le premier identifiant et faire lire par lesdits moyens automatiques de lecture, un deuxième identifiant porté par un support d'information personnel qui est déjà en possession de l'utilisateur, puis associer ledit utilisateur avec ledit deuxième identifiant,
- identifier ultérieurement l'utilisateur en faisant lire ledit support d'information personnel par lesdits moyens automatiques de lecture, puis commander les moyens automatiques de contrôle pour sélectivement verrouiller et déverrouiller les cycles sur des postes de verrouillage en fonction de la lecture dudit support d'information personnel.

Dans différents modes de réalisation du système selon l'invention, on peut éventuellement avoir recours en outre à l'une et/ou à l'autre des dispositions suivantes (utilisables éventuellement indépendamment les unes des autres et indépendamment des dispositions précitées) :
- les moyens automatiques de lecture sont adaptés pour lire au moins des supports d'information électroniques à lecture sans contact ;
- les moyens automatiques de lecture sont adaptés pour lire des supports d'information choisis parmi les supports d'information RFID et les supports d'information NFC.

### BREVE DESCRIPTION DES DESSINS

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique en perspective montrant un système automatique de mise à disposition de cycles adaptée pour mettre en oeuvre un précédé selon une forme de réalisation de l'invention,
- et la figure 2 est un schéma bloc illustrant les composants électriques principaux du système de la figure 1.

### DESCRIPTION PLUS DETAILLEE

Sur les différentes figures, les mêmes références désignent des éléments identiques ou similaires.

La présente invention concerne un procédé et un système automatique de contrôle d'accès pour la mise à disposition automatique de cycles. La description qui suit sera donc faite pour le cas où on donne accès à un service de mise à disposition automatique de cycles sur la voie publique, notamment un service de location automatique de tels cycles.

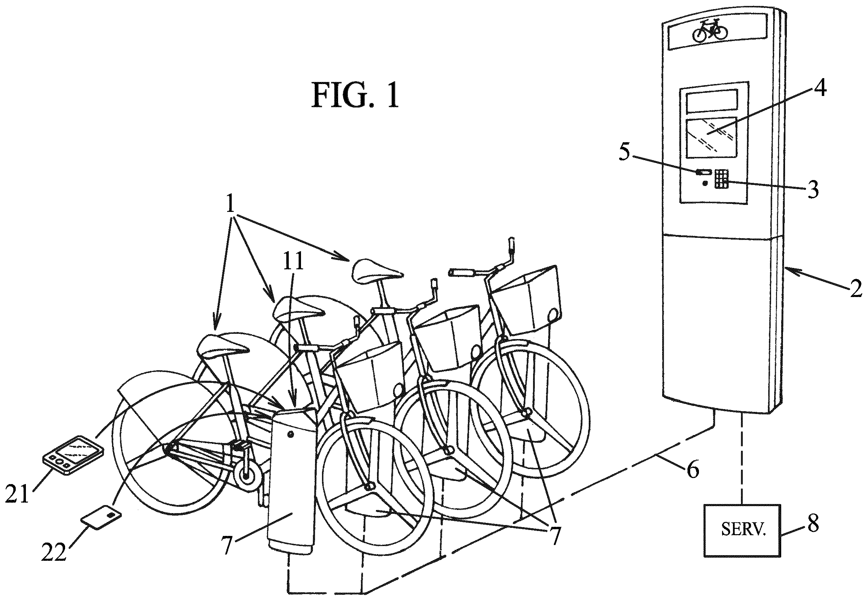

Comme représenté sur la figure 1, le système en question comprend des cycles 1 tels que notamment des bicyclettes, stockés généralement en plusieurs stations de stockage de cycles, dont une est représentée sur la figure 1. Ces stations de stockage de cycles peuvent par exemple être réparties en différents endroits d'une même ville.

Chaque station de stockage de cycles peut comprendre un poste central de station 2, qui se présente ici sous la forme d'une borne interactive dotée d'une interface utilisateur comprenant par exemple un clavier 3, un écran 4, éventuellement un lecteur de cartes portatives électroniques 5, un dispositif d'impression de tickets, etc. En variante, la borne interactive 2 pourrait ne pas comporter d'interface utilisateur et être une simple passerelle de communication entre la station de stockage de cycles et un serveur central 8 (SERV.).

La borne interactive 2 communique d'une part, avec le serveur central 8 qui gère les abonnements et les locations de cycles, et d'autre part, avec une pluralité de postes de verrouillage 7 qui permettent de verrouiller les cycles pendant leur stockage et qui peuvent par exemple se présenter sous la forme de bornes de verrouillage fixées au sol sur la voie publique et adaptées pour verrouiller chacune un cycle 1.

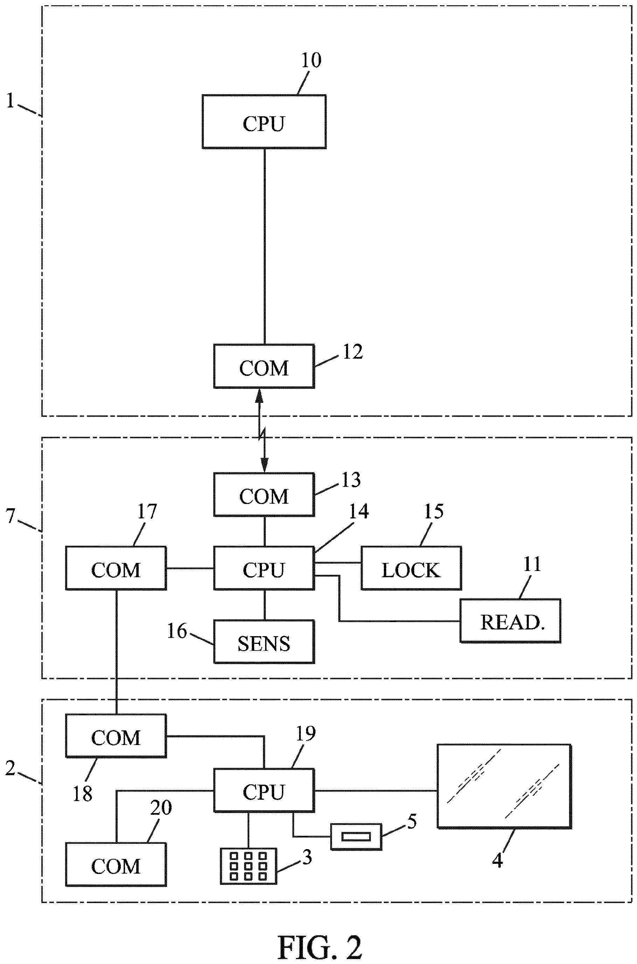

Le cycle 1 comporte classiquement un châssis composé d'un cadre porté par la roue arrière et d'une fourche surmontée du guidon et montée sur la roue avant. Comme représenté sur la figure 2, chaque cycle 1 peut éventuellement comporter une unité centrale électronique 10 (CPU), par exemple un contrôleur, microprocesseur ou similaire, qui peut être reliée par exemple à une interface de communication 12 (COM) qui est adaptée pour communiquer avec une interface de communication similaire 13 (COM) appartenant à chaque borne de verrouillage 7. Les interfaces de communication 12, 13 peuvent être de tout type connu et fonctionner par exemple en mode filaire (contact ohmique), par induction, par ondes radio ou autres.

L'interface de communication 13 de la borne de verrouillage 7, quant à elle, communique avec une unité centrale électronique 14 (CPU) propre à la borne de verrouillage 7 (microprocesseur, microcontrôleur ou autre), laquelle unité centrale 14 commande par ailleurs un verrou électrique 15 (LOCK - un exemple d'un tel verrou est donné par exemple dans le document EP-A-1 820 722) adapté pour verrouiller un cycle sur la borne de verrouillage 7, et communique avec au moins un capteur 16 (SENS) adapté pour détecter le verrouillage d'un cycle sur la borne de verrouillage 7, et une interface de communication 17 (COM), par exemple un MODEM adapté pour communiquer par voie filaire 6 (figure 1) ou par une liaison radio courte portée ou tout autre manière, avec une interface de communication 18 similaire (COM) appartenant à la borne interactive 2 susmentionnée.

Chaque poste de verrouillage 7 peut en outre comporter un lecteur électronique 11 (READ) de support de données, de préférence adapté pour une lecture sans contact, adapté par exemple pour lire un support de données RFID ou NFC, notamment un téléphone mobile 21 ou une carte électronique (voir figure 1) au moyen desquels les utilisateurs abonnés peuvent s'identifier.

La borne interactive 2 comporte, quant à elle, également une unité centrale électronique 19 (CPU - voir figure 2) telle qu'un microprocesseur, microcontrôleur ou autre, qui communique avec les périphériques 3-5 susmentionnés ainsi qu'avec une interface de communication 20 (COM) telle qu'un MODEM communiquant par radio ou par voie filaire avec le serveur central 8 susmentionné.

Le dispositif qui vient d'être décrit fonctionne comme suit.
(a) Dans une étape d'enregistrement initial, par exemple une étape d'abonnement de longue ou courte durée, on enregistre un nouvel utilisateur sur le serveur 8 et on lui communique un premier identifiant, qui peut éventuellement être un objet codé tel qu'une carte électronique, mais peut avantageusement être un code d'identification temporaire, par exemple imprimé sur un ticket ou reçu par l'utilisateur sur son téléphone mobile 21.
(b) Pour pouvoir ensuite s'identifier auprès du système de mise à disposition de cycles, l'utilisateur procède ensuite à une étape d'association, par exemple la première fois qu'il se rend sur une station de stockage de cycles pour emprunter un cycle 1. Au cours de cette étape, l'utilisateur s'identifie d'abord avec le premier identifiant, par exemple sur la borne interactive 2 (il peut par exemple taper ce premier identifiant sur le clavier 3 lorsqu'il s'agit d'un code). La borne interactive 2 demande alors à l'utilisateur de faire lire par le lecteur 11 d'un des postes de verrouillage 7 (ou par tous autres moyens automatiques de lecture du système, par exemple un lecteur 11 (non représenté) inclus dans la borne interactive 2), un support d'information personnel codé dont l'utilisateur est déjà en possession et qui est compatible avec le lecteur 11, donc par exemple un support d'information RFID ou NFC dans l'exemple décrit ci-dessus (téléphone mobile 21 ou carte électronique 22, ou autre). Ce support d'information personnel porte un deuxième identifiant, qui est lu par le lecteur 11 utilisé et qui est transmis au serveur 8, après quoi le serveur 8 associe l'utilisateur au deuxième identifiant.
(c) Par la suite, lorsqu'un utilisateur souhaite emprunter un cycle 1 sur une station de stockage de cycles, il peut s'identifier au moyen du support de données 21, 22 utilisé au cours de l'étape d'association (b) susmentionnée, par exemple en faisant lire ce support d'information 21, 22 par le lecteur 11 d'un poste de verrouillage 7. Le lecteur 11 lit donc le deuxième identifiant susmentionné et le transmet au serveur 8 qui fait la relation avec l'utilisateur correspondant.

Le serveur 8 vérifie alors si l'utilisateur est en droit de louer un cycle et dans l'affirmative, le serveur donne à la borne interactive 2 l'autorisation de libérer le cycle 1 et note l'heure de début de location. La borne interactive 2 commande alors la libération d'un cycle 1 de sa borne de verrouillage 7, de façon que l'utilisateur puisse le prendre et l'utiliser.

Si le cycle 1 a été libéré par la borne de verrouillage 7, l'utilisateur peut librement l'utiliser. Lorsqu'il a terminé de l'utiliser il rend le cycle sur une station de stockage de cycle (celle où il a emprunté le cycle ou une autre) en engageant le cycle 1 sur une borne de verrouillage libre 7 de cette station. La borne interactive 2 de cette station informe alors le serveur 8 que le cycle 1 a été rendu, puis si serveur confirme que la situation est en ordre, fait verrouiller le cycle 1 sur la borne de verrouillage 7.

## Revendications

1. Procédé de contrôle d'accès mis en oeuvre par un système automatique de contrôle d'accès comportant des moyens automatiques de lecture (11) de supports d'information et des moyens automatiques de contrôle (15) adaptés pour sélectivement autoriser un accès, le procédé comportant au moins les étapes suivantes :
(a) une étape d'enregistrement initial dans laquelle on enregistre un utilisateur et on lui communique un premier identifiant,
(b) une étape d'association dans laquelle l'utilisateur, déjà en possession d'un support d'information personnel (21, 22) codé portant un deuxième identifiant, s'identifie avec le premier identifiant et fait lire ce support d'information personnel (21, 22) par lesdits moyens automatiques de lecture (11), après quoi on associe l'utilisateur au deuxième identifiant,
(c) au moins une étape ultérieure d'identification, dans laquelle on fait lire ledit support d'information personnel (21, 22) par lesdits moyens automatiques de lecture (11) pour accéder au deuxième identifiant, et on commande les moyens automatiques de contrôle (15) en fonction de la lecture dudit support d'information personnel, pour sélectivement débloquer un cycle (1) initialement verrouillé sur un poste de verrouillage (7).

2. Procédé selon la revendication 1, dans lequel le support d'information personnel (21, 22) utilisé au cours des étapes (b) et (c) est un support d'information électronique à lecture sans contact.

3. Procédé selon la revendication 2, dans lequel le support d'information personnel (21, 22) utilisé au cours des étapes (b) et (c) est choisi parmi un support d'information RFID et un support d'information NFC.

4. Procédé selon l'une quelconque des revendications précédentes, dans lequel le support d'information personnel utilisé au cours des étapes (b) et (c) est choisi parmi une carte électronique (22) et un téléphone mobile (21).

5. Système automatique de contrôle d'accès pour la mise à disposition automatique de cycles (1), comportant des moyens de commande (8, 2, 14), des moyens automatiques de lecture (11) de supports d'information et des moyens automatiques de contrôle (15) adaptés pour sélectivement autoriser un accès, les moyens de commande étant adaptés pour :
- enregistrer un utilisateur et lui communiquer un premier identifiant,
- identifier l'utilisateur avec le premier identifiant et faire lire par lesdits moyens automatiques de lecture (11), un deuxième identifiant porté par un support d'information personnel (21, 22) qui est déjà en possession de l'utilisateur, puis associer ledit utilisateur avec ledit deuxième identifiant,
- identifier ultérieurement l'utilisateur en faisant lire ledit support d'information personnel par lesdits moyens automatiques de lecture, puis commander les moyens automatiques de contrôle (15) pour sélectivement verrouiller et déverrouiller les cycles (1) sur des postes de verrouillage (7) en fonction de la lecture dudit support d'information personnel.

6. Système selon la revendication 5, dans lequel les moyens automatiques de lecture (11) sont adaptés pour lire au moins des supports d'information électroniques (21, 22) à lecture sans contact.

7. Système selon la revendication 6, dans lequel les moyens automatiques de lecture (11) sont adaptés pour lire des supports d'information (21, 22) choisis parmi les supports d'information RFID et les supports d'information NFC.

## Patentansprüche

1. Zugangskontrollverfahren, das von einem automatischen Zugangskontrollsystem durchgeführt wird, das automatische Leseeinrichtungen (11) zum Lesen von Datenträgern und automatische Kontrolleinrichtungen (15) zum selektiven Autorisieren eines Zugangs aufweist, wobei das Verfahren mindestens die folgenden Schritte aufweist:
(a) einen initialen Registrierungsschritt, in welchem ein Benutzer registriert wird und ihm ein erster Identifikator mitgeteilt wird,
(b) einen Zuordnungsschritt, in welchem der Benutzer, der bereits im Besitz eines kodierten persönlichen Datenträgers (21, 22) ist, sich mit dem ersten Identifikator identifiziert und diesen persönlichen Datenträger (21, 22) von den automatischen Leseeinrichtungen (11) lesen lässt, woraufhin dem Benutzer ein zweiter Identifikator zugeordnet wird,
(c) mindestens einen späteren Identifikationsschritt, in welchem den automatischen Leseeinrichtungen (11) erlaubt wird, den persönlichen Datenträger (21, 22) zu lesen, um auf den zweiten Identifikator zuzugreifen, und die automatischen Kontrolleinrichtungen (15) gemäß dem Lesen des persönlichen Datenträgers gesteuert werden, um selektiv ein an einer Verriegelungsstelle (7) ursprünglich verriegeltes Fahrrad (1) freizugeben.

2. Verfahren nach Anspruch 1, in welchem der während der Schritte (b) und (c) verwendete persönliche Datenträger (21, 22) ein kontaktlos lesbarer elektronischer Datenträger ist.

3. Verfahren nach Anspruch 2, in welchem der während der Schritte (b) und (c) verwendete persönliche Datenträger (21, 22) aus einem RFID-Datenträger und einem NFC-Datenträger ausgewählt ist.

4. Verfahren nach einem der vorstehenden Ansprüche, in welchem der während der Schritte (b) und (c) verwendete persönliche Datenträger (21, 22) aus einer elektronischen Karte (22) und einem Mobiltelefon (21) ausgewählt ist.

5. Automatisches Zugangskontrollsystem zur automatischen Verfügungsstellung von Fahrrädern (1), aufweisend Steuereinrichtungen (8, 2, 14), automatische Leseeinrichtungen (11) zum Lesen von Datenträgern und automatische Kontrolleinrichtungen (15) zum selektiven Autorisieren eines Zugangs, wobei die Steuereinrichtungen konfiguriert sind, um:
- einen Benutzer zu registrieren und ihm einen ersten Identifikator mitzuteilen,
- den Benutzer mit dem ersten Identifikator zu identifizieren und den automatischen Leseeinrichtungen (11) zu erlauben, einen zweiten Identifikator zu lesen, der auf einem persönlichen Datenträger (21, 22) ist, der bereits im Besitz des Benutzers ist, dann dem Benutzer den zweiten Identikator zuzuordnen;
- später den Benutzer dadurch zu identifizieren, dass den automatischen Leseeinrichtungen (11) erlaubt wird, den persönlichen Datenträger zu lesen, dann die automatischen Kontrolleinrichtungen (15) gesteuert werden, um gemäß dem Lesen des persönlichen Datenträgers die Fahrräder (1) an Verriegelungsstellen (7) selektiv zu verriegeln und freizugeben.

6. System nach Anspruch 5, in welchem die automatischen Leseeinrichtungen (11) fähig sind, zumindest kontaktlos lesbare elektronische Datenträger zu lesen.

7. System nach Anspruch 6, in welchem die automatischen Leseeinrichtungen (11) fähig sind, aus den RFID-Datenträgern und den NFC-Datenträgern ausgewählte Datenträger zu lesen.

## Claims

1. An access control method implemented by an automatic access control system comprising automatic means for reading (11) information media and automatic control means (15) suited for selectively authorizing access, where the method comprises at least the following steps:
(a) an initial registration step in which a user is registered and given a first identifier,
(b) an association step in which the user, who is already in possession of a coded personal information medium (21, 22) bearing a second identifier, is identified with the first identifier and has this personal information medium (21, 22) read by said automatic reading means (11), after which the user is associated with the second identifier,
(c) at least one subsequent identification step, in which said automatic reading means (11) is made to read said personal information medium (21, 22) in order to access the second identifier, and the automatic control means (15) is commanded as a function of the reading of said personal information medium, to selectively unlock a cycle (1) initially locked on a locking position (7).

2. Method according to claim 1, in which the personal information medium (21, 22) used during steps (b) and (c) is an electronic information medium with contactless reading.

3. Method according to claim 1, in which the personal information medium (21, 22) used during steps (b) and (c) is chosen among an RFID information medium and an NFC information medium.

4. Method according to any one of the preceding claims, in which the personal information medium (21, 22) used during steps (b) and (c) is chosen among an electronic card (22) and a mobile telephone (21).

5. Automatic access control system for automatically making cycles (1) available, comprising command means (8, 2, 14), automatic information media reading means (11) and automatic control means (15) suited for selectively authorizing an access, where the control means are suited for:
- recording a user and communicating a first identifier to them,
- identifying the user with the first identifier and having said automatic reading means (11) read a second identifier carried by a personal information medium (21, 22) which is already in possession of the user, and then associating said user with said second identifier,
- subsequently identifying the user by having said automatic reading means read said personal information medium and then commanding the automatic control means (15) for selectively locking and unlocking the cycles (1) on locking positions (7) based on the reading of said personal information medium.

6. System according to claim 5, in which the automatic reading means (11) are suited for reading at least electronic information media (21, 22) with contactless reading.

7. System according to claim 6, in which the automatic reading means (11) are suited for reading information media (21, 22) chosen among RFID and NFC information media.
